# EUROPÄISCHE PATENTSCHRIFT

(11) **EP 1 904 342 B1**
(45) Veröffentlichungstag und Bekanntmachung des Hinweises auf die Patenterteilung: **27.02.2013**
(21) Anmeldenummer: 06763319.8
(22) Anmeldetag: 29.05.2006
(51) Int. Cl.: G01S 15/93, B60Q 9/00, G01S 13/93

(54) **PARKVORRICHTUNG**
PARKING DEVICE
DISPOSITIF DE STATIONNEMENT

(30) Priorität: 08.07.2005 DE 102005032095
(43) Veröffentlichungstag der Anmeldung: 02.04.2008
(73) Patentinhaber: ROBERT BOSCH GMBH, 70442 Stuttgart (DE)
(72) Erfinder: LEE, Wei-Chia, 71229 Leonberg (DE)
(86) Internationale Anmeldenummer: PCT/EP2006/062660
(87) Internationale Veröffentlichungsnummer: WO 2007/006604

(56) Entgegenhaltungen:
- EP-A- 1 602 530
- WO-A-2005/024463
- WO-A-2005/033736
- DE-A1- 3 844 340
- US-A1- 2003 210 173
- US-B1- 6 476 731

## Beschreibung

### Stand der Technik

Die Erfindung geht aus von einer Parkvorrichtung nach der Gattung des Anspruchs 1. Aus der DE 102 58 310 A 1 ist bereits ein Verfahren zur Ermittlung einer geeigneten Parklücke bekannt. Hierbei wird automatisch eine Fahrzeugseite ausgewählt, an der eine Parklückenvermessung zur Suche einer zum Einparken geeigneten Parklücke durchgeführt wird. Dabei wird sowohl die Länge einer geeigneten Parklücke vermessen, als auch der Abstand zur linken und zur rechten Straßenseite bestimmt.

Aus der WO 2005/024463 A1 ist ein Verfahren bekannt, bei dem die Länge und Breite einer Parklücke beim Vorbeifahren mittels eines Ultraschallsensorsystems gemessen wird, wobei zur Erhöhung der Genauigkeit auch bei höheren Fahrzeuggeschwindigkeiten von bis zu 30 km/h Ultraschallsensoren mit unterschiedlichen Empfindlichkeiten für die unterschiedlichen Detektionsbereiche von Breite und Länge der Parklücke vorgesehenen sind.

Aus der DE 3844340 A1 ist eine Einparkhilfe für ein Kraftfahrzeug bekannt, bei der eine Parklücke vermessen wird, indem die die Parklücke begrenzenden Objekte erkannt werden. Eine Steuereinheit berechnet aus den Abständen des Fahrzeugs zu den Begrenzungen entsprechende Manövrierparameter für einen Einparkvorgang.

Aus der EP 1602530 A1 ist ein Verfahren zur Unterstützung eines Einparkvorgangs bekannt, bei dem mittels einer Sensoranordnung Daten zu einer Parklücke während des Vorbeifahrens an der Parklücke erfasst werden. Dabei werden Daten die vor und nach dem Erreichen der Parklücke erfasst werden und die beispielsweise von parkenden Fahrzeugen stammen, verwendet, um eine Begrenzung bzw. Orientierung der Parklücke auch dann berechnen zu können, wenn eine seitliche Begrenzung der Parklücke nicht von den Sensoren erfasst werden kann.

### Vorteile der Erfindung

Die erfindungsgemäße Parkvorrichtung mit den Merkmalen des Hauptanspruchs hat demgegenüber den Vorteil, dass automatisch eine Ausrichtung einer Parklücke bestimmt wird. Hierdurch kann die Effizienz und die Genauigkeit bei der Parklückenvermessung erhöht werden. So kann z.B. eine Parklücke zum Quereinparken senkrecht zum Straßenverlauf dennoch als eine geeignete Parklücke erkannt werden, auch wenn der Abstand zwischen den Parklückenbegrenzungen zu einem Längseinparken nicht ausreichen würde. Ferner werden auch Hinweise und gegebenenfalls Unterstützung für ein Längseinparken bei zwei benachbarten Querparklücken verhindert, die auch ein Längseinparken ermöglichen würden. Insgesamt wird damit die Zuverlässigkeit der Parklückenvermessung erhöht und der Komfort für den Nutzer gesteigert. Zudem kann auch für den Fall, dass bereits eine Ausrichtung der Parklücke feststeht, die Genauigkeit der Parklückenvermessung durch eine Anpassung des für die Parklückenvermessung verwendeten Messverfahrens z.B. hinsichtlich der Reichweite erhöht werden.

Durch die in den Unteransprüchen aufgeführten Maßnahmen sind vorteilhafte Weiterbildungen und Verbesserungen der im Hauptanspruch angegebenen Parkvorrichtung möglich. Erfindungsgemäß ist vorgesehen, die Ausrichtung der Parklücke anhand von Fahrzeugen in der Umgebung der Parklücke zu bestimmen. Wird sich hierbei an der Ausrichtung der bereits dort geparkten Fahrzeuge orientiert, so kann mit einer hohen Wahrscheinlichkeit auf die Ausrichtung der zwischen den Fahrzeugen vorgesehenen Parklücke geschlossen werden. Unter einer Ausrichtung kann dabei eine beliebige Winkelanordnung des einzuparkenden Fahrzeugs in der Parklücke verstanden werden. In den häufigsten Fällen wird dies entweder ein Längseinparken bei einer in Fahrtrichtung ausgerichteten Parklücke oder ein Quereinparken ungefähr senkrecht zur Fahrtrichtung sein. Jedoch ist es auch möglich, dass Parklücken schräg zur Fahrtrichtung, z.B. in einem Winkel von etwa 45°, ausgerichtet sind, wobei auch eine derartige, entsprechende Ausrichtung erfasst werden kann.

Weiterhin ist es vorteilhaft, insbesondere die Fahrzeugkontur eines die Parklücke begrenzenden Fahrzeugs zu vermessen und auszuwerten. Aus der Ausrichtung und der Länge der Kontur kann erkannt werden, ob das Fahrzeug mit seiner Längsseite parallel zur Straße steht, ob eine Frontseite oder Rückseite zur Straße zeigt oder ob gegebenenfalls bei einer schräg zur Straße verlaufenden Kontur, z.B. in einem Winkel zwischen 15° und 80°, das Fahrzeug schräg zur Straße geparkt ist. Das eigene Fahrzeug sollte mit sehr hoher Wahrscheinlichkeit in gleicher Wiese geparkt werden. Ferner ist es möglich, auch eine Streuung der Abstandswerte auszuwerten. Hierdurch können z.B. Radkästen an einem Fahrzeug erfasst werden, so dass in einem solchen Fall auf eine Ausrichtung des Fahrzeugs längs zum Fahrbahnverlauf geschlossen werden kann. Zur Ermittlung, welche Fahrzeugseite dem vorbeifahrenden Fahrzeug zuweist, ist beispielsweise ein Speicher vorgesehen, in dem charakteristische Muster für einen Vergleich mit gemessenen Daten abgelegt sind.

Ferner ist es vorteilhaft, einen optischen Sensor zur Detektion einer Seitenfläche eines Fahrzeugs vorzusehen. So können z.B. Sensoren insbesondere auf ein Erfassen eines Reifens ausgerichtet sein, indem sie ausgelegt sind, ein kreisrundes Muster in der Fahrzeugumgebung zu erkennen. Hierdurch kann auf die Außenfläche eines Reifens und damit ebenfalls auf eine parallel zum Straßenverlauf ausgerichtete Position des die Parklücke begrenzenden Fahrzeugs geschlossen werden.

Ferner ist es vorteilhaft, auch eine Bordsteinerkennung durchzuführen. Insbesondere zur Ergänzung einer Ermittlung von Positionen geparkter Fahrzeuge ist es vorteilhaft, zu überprüfen, ob sich eine Bordsteinabstandsmessung mit dem Ergebnis der Vermessung der Fahrzeugkonturen der die Parklücke begrenzenden Fahrzeuge deckt. Hierdurch kann eine höhere Vorhersagegenauigkeit erreicht werden.

Weiterhin ist es vorteilhaft, einen Einparkweg gemäß der ermittelten Ausrichtung der Parklücke zu bestimmen. Entsprechend können auch Steuersignale zum Einparken in die Parklücke ausgegeben werden. Der Einparkvorgang selbst kann entweder nach Anweisung durch die Parkvorrichtung durch den Benutzer oder auch automatisch ausgeführt werden. Eine Auswahl einer Einparkstrategie durch den Fahrer kann unterbleiben, da die Ausrichtung der Parklücke automatisch erfasst und damit auch der Einparkweg entsprechend zutreffend festgelegt wird.

### Zeichnung

Ausführungsbeispiele der Erfindung sind in der Zeichnung dargestellt und in der nachfolgenden Beschreibung näher erläutert. Es zeigen
Figur 1 eine schematische Aufsicht auf ein Kraftfahrzeug mit einer erfindungsgemäßen Parkvorrichtung,
Figur 2 die Funktionsweise einer erfindungsgemäßen Parkvorrichtung bei einem Vermessen eines Abstands zu einem geparkten Fahrzeug,
Figur 3 zwei Ausführungsbeispiele für mögliche Reflexionssignale bei einer senkrecht und bei einer schräg zum Straßenverlauf angeordneten Parklücke,
Figur 4 ein Ausführungsbeispiel für Messsignale einer Kontur von eine Parklücke begrenzende, beabstandet hintereinander parallel zur Fahrtrichtung abgestellte Fahrzeuge,
Figur 5 ein erfindungsgemäßes Verfahren zum Betreiben der erfindungsgemäßen Parkvorrichtung.

### Beschreibung des Ausführungsbeispiels

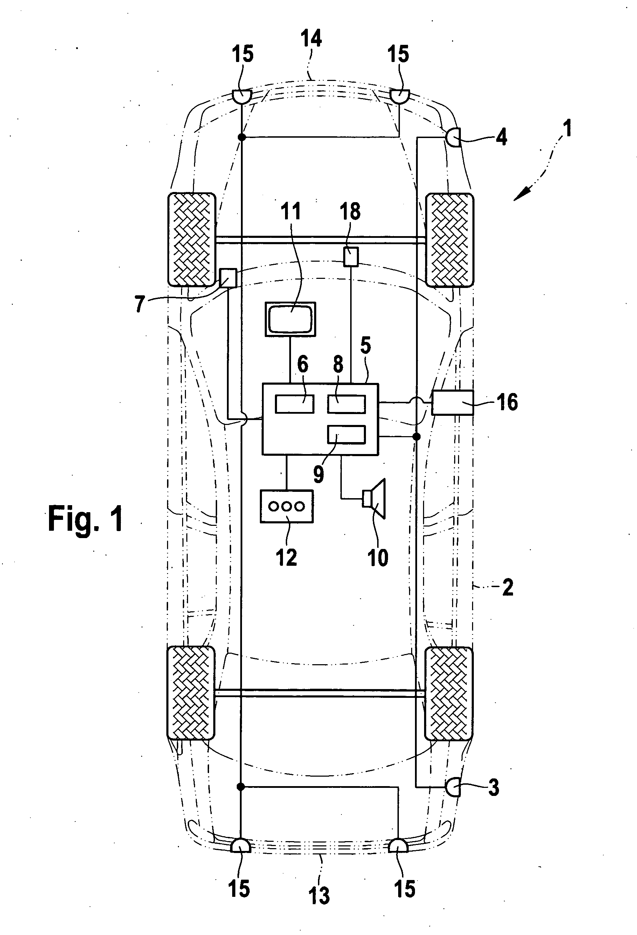

In der Figur 1 ist ein Kraftfahrzeug 1 dargestellt, an dessen rechter Fahrzeugseite 2 ein erster Abstandssensor 3 im hinteren Bereich des Fahrzeugs und ein zweiter Abstandssensor 4 im vorderen Bereich des Fahrzeugs angeordnet sind. Die Abstandssensoren 3, 4 sind in einer ersten Ausführungsform als Ultraschall-Abstandssensoren ausgeführt. Ein von ihnen ausgesendetes Ultraschallsignal wird von Hindernissen im Bereich vor der rechten Fahrzeugseite reflektiert und von den Abstandssensoren 3, 4 wieder aufgefangen. Entsprechend empfangene Signale werden an eine Auswerteeinheit 5 im Fahrzeug weitergeleitet. Unter Berücksichtigung der Schallgeschwindigkeit wird von einer Recheneinheit 6 ein Abstandswert zu den Hindernissen in der Fahrzeugumgebung berechnet. Anstelle der Ultraschallsensoren können auch andere Umfelderfassungssensoren, z.B. Radarsensoren, Lidarsensoren oder . Videosensoren zur Abstandsmessung eingesetzt werden.

Um einen entsprechenden Verlauf einer Kontur von Hindernissen in der Umgebung der rechten Fahrzeugseite ermitteln zu können, werden die gemessenen Abstandswerte jeweils einer Position des Fahrzeugs zugewiesen. Hierzu ist die Auswerteeinheit 5 mit einem Radsensor 7 und bevorzugt auch mit einem Lenkwinkelsensor 18 verbunden. Über den Radsensor 7 ist eine von dem Fahrzeug zurückgelegte Wegstrecke messbar. Über den Lenkwinkelsensor kann zudem auch der Einschlag der Lenkung ermittelt werden. Durch die Kombination aus zurückgelegter Wegstrecke und eingeschlagener Lenkung lässt sich der Fahrweg des Fahrzeugs zurückverfolgen. Die von den Abstandssensoren 3, 4 gemessenen Abstandswerte werden in einem vorzugsweise nicht flüchtigen Speicher 8 in der Auswerteeinheit 5 abgelegt. Sie werden hierbei einer Position an der Fahrstrecke des Fahrzeugs zugeordnet.

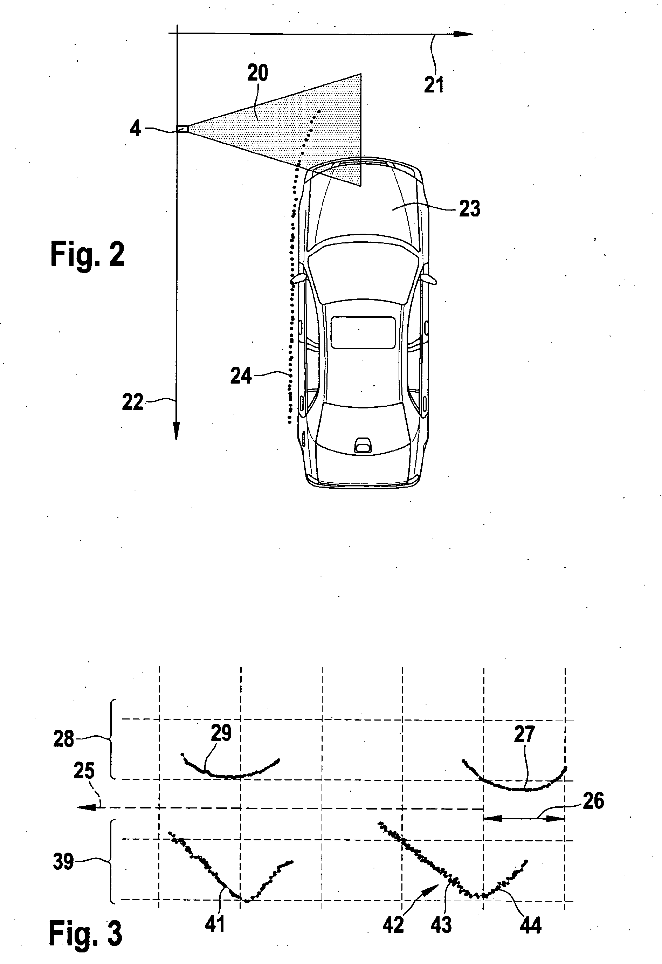

Eine Durchführung einer Messung ist in der Figur 2 gezeigt. Von dem Fahrzeug 1 ist zur Vereinfachung nur der Abstandssensor 4 im vorderen Bereich des Fahrzeugs dargestellt. Der Abstandssensor 4 sendet bei einer Ausführung als ein Ultraschallsensor eine Schallkeule 20 aus. Bei der Vorbeifahrt können die reflektierten Schallsignale, die auf die Position eines Hindernisses schließen lassen, durch die Zuordnung über die zurückgelegte Wegstrecke und gegebenenfalls den Lenkwinkeleinschlag im Verhältnis zu der Bewegung des Fahrzeugs räumlich zugeordnet werden. Entsprechend kann einem reflektierten Signale eine X-Koordinate 21 und eine Y-Koordinate 22 zugeordnet werden, wobei die Fahrebene des Fahrzeugs als diejenige Ebene gewählt wird, in der das Koordinatensystem aufgespannt wird. Entsprechend erhält man bei einer Vorbeifahrt an einem geparkten Fahrzeug 23 einen Satz von Messpunkten 24, aus der sich auf die Kontur des geparkten Fahrzeugs 23 schließen lässt. Für die Vermessung einer Parklücke ist dabei ein vorderer Abstandssensor 4 am Fahrzeug ausreichend. Für den Fall, dass gegebenenfalls auch bei einer Rückwärtsfahrt im Vorbeifahren eine Parklücke vermessen werden soll, kann ergänzend der Abstandssensor 3 vorgesehen sein. Gegebenenfalls kann der zweite Abstandssensor aber auch für eine Redundanz- bzw. Kontrollmessung verwendet werden. Weiterhin ist es auch möglich, noch weitere Sensoren zur Abstandsmessung einzusetzen. Bei dem in der Figur 2 gezeigten Ausführungsbeispiel wird eine recht große Länge eines Hindernisses in Form eines Fahrzeugs gemäß der Messpunkte 24 gemessen. Die gemessene Länge des Hindernisses 23 kann mit gespeicherten Werten in einem Speicher 9 der Auswerteeinheit verglichen werden. So ist es z.B. möglich, dass Hindernisse mit einer glatten Oberfläche und einer Länge zwischen 2,5 und 5 m als parallel zum Straßenverlauf, also entlang der Y-Achse 22, ausgerichtete, geparkte Fahrzeuge betrachtet werden. Das in der Figur 2 gezeigte, geparkten Fahrzeug 23 ist damit parallel zur Fahrtrichtung des fahrenden, zu parkenden Fahrzeugs ausgerichtet.

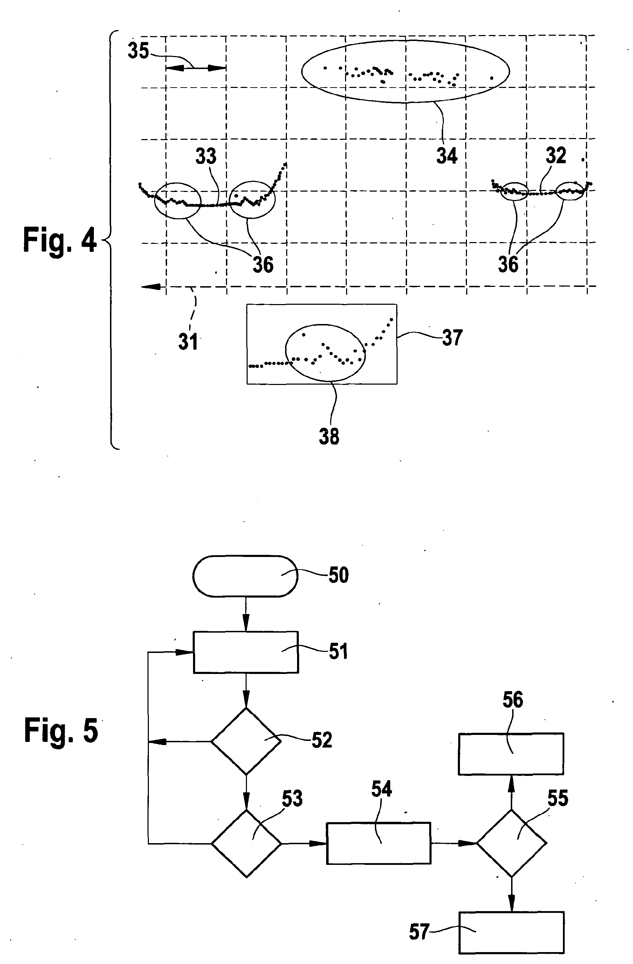

Zur Überprüfung, ob ein Fahrzeug parallel zum Straßenverlauf angeordnet ist, ist in der Figur 4 eine weitere Auswertung dargestellt, wobei hier lediglich die Messergebnisse, nicht aber die zugehörigen Fahrzeuge in ein Diagramm eingetragen sind. Ein Fahrzeug ist entsprechend des Pfeils 31 an verschiedenen Hindernissen vorbeigefahren. Hierbei wurde eine erste Kontur 32, eine zweite Kontur 33 und eine dritte Kontur 34 erfasst. Die Breite eines Kästchens gemäß der Doppelpfeildarstellung 35 soll hierbei einen Abstand von 2 m darstellen. Bei dem ersten Signal 32 und dem zweiten Signal 33 handelt es sich offenkundig um ein von einem geparkten Fahrzeug reflektiertes Signal, das eine entsprechend gute Reflexion ermöglicht und bei dem eine Länge des Fahrzeugs von etwa 3,50 m bis 4,50 m erfasst wird. Es könnte sich folglich um ein in Fahrtrichtung 31 ausgerichtetes Fahrzeug handeln. Dies wird auch durch Streuungen 36 im Anfangs- und im Endbereich des Hindernisses bestätigt: In der ergänzenden Darstellung 37 ist der Bereich der Streuungen 36 vergrößert dargestellt. Durch den Radkasten an den Fahrzeugen wird der Verlauf der Signale 32 bzw. 33 durch eine Störung 38 in einem kurzen Bereich unterbrochen. Dies hat seine Ursache darin, dass der Messstrahl in den Radkasten eindringen kann und hierdurch in einem kleinen Bereich ein größerer Abstand vorzuliegen scheint. Anhand dieser Streuung kann ebenfalls erkannt oder zumindest bestätigt werden, dass es sich hierbei um ein in Fahrtrichtung 31 ausgerichtetes Fahrzeug handelt. Es ist also nun ein Längseinparken parallel zur Fahrtrichtung vorzunehmen. Entsprechend kann überprüft werden, ob der Abstand zwischen dem dem ersten Signal 32 zugeordneten Fahrzeug und dem dem zweiten Signal 33 zugeordneten Fahrzeug für ein Einparken des Fahrzeugs selbst ausreichend groß ist. Hierzu ist es erforderlich, dass die Auswerteeinheit 5 einen Vergleich der Parklückenlänge mit einer in dem Speicher 9 abgelegten Länge des zu parkenden Fahrzeugs durchführt. Eine weitere Überprüfung ist durch eine Auswertung der weiteren Signalgruppe 34 möglich. Die größere Streuung lässt hier darauf schließen, dass es sich um einen Bordstein handelt, bei dem infolge seiner geringen Höhe nur eine gestreute Reflexion erfolgt. Der Abstand des Bordsteins kann für eine Plausibilisierung mit ausgewertet werden. Ist der Abstand sehr groß, so liegt möglicherweise doch eine Querparklücke vor. Im vorliegenden Fall beträgt der Abstand zwischen einer vorderen Fahrzeugkante und dem Bordstein knapp 4m. Dies wäre für ein Längseinparken sicher ausreichend, wäre aber gegebenenfalls für eine Querparklücke zu knapp.

Andere Ausführungsbeispiele für Messdaten sind in der Figur 3 dargestellt. Die beiden Darstellungen 28, 39 von Signalen in der Figur 3 sollen verschiedene Signalerfassungssituationen beschreiben, die räumlich voneinander unabhängig auftreten. In der Figur 3 soll der Doppelpfeil 26 einen Abstand von 2m bezeichnen. In einer ersten Darstellung 28 ist ein erstes Signal 29 eines ersten Hindernisses und ein zweites Signal 27 eines zweiten Hindernisses mit einer Länge von jeweils etwa 2m und einem Abstand von etwa 4m dargestellt. Für eine Längsseite eines Fahrzeugs sind beide Signale 27, 29 zu kurz. Damit handelt es sich bei den detektierten Hindernissen wahrscheinlich um eine Fahrzeugvorderseite oder eine Fahrzeugrückseite. Die Fahrzeuge stehen also senkrecht zu einer gestrichelt skizzierten Fahrtrichtung 25. Möglicherweise kann das Fahrzeug ebenfalls senkrecht zu der Fahrtrichtung 25 in die Parklücke zwischen die Fahrzeuge 27 und 29 eingeparkt werden, zudem keine weiteren Hindernissignale in dem Abstand zwischen den beiden Signalen 27, 29 erfasst werden und der Abstand zwischen den beiden Fahrzeugen für ein Quereinparken ausreichend ist.

In der zweiten Darstellung 39 ist ein erstes Signal 41 und ein zweites Signal 42 benachbart dargestellt. Die beiden Signale lassen darauf schließen, dass ein Hindernis spitzenförmig auf das vorbeifahrende Fahrzeug zuzeigt. Es fällt hierbei auf, dass z.B. bei dem zweiten Signal 42 eine erste Seitenfläche 43 länger als eine zweite Seitenfläche 44 ist, die ungefähr senkrecht zueinander verlaufen. Dies lässt darauf schließen, dass die den Signalen 41, 42 zugeordneten Fahrzeuge schräg zu dem Verlauf der Fahrtrichtung des Fahrzeugs angeordnet sind. Aus dem Winkel des Verlaufs der Signale 41, 42 kann auf den vorzunehmenden Einstellwinkel des Fahrzeugs gegenüber der Fahrtrichtung geschlossen werden.

Hat die Recheneinheit 6 eine geeignete Parklücke und deren Ausrichtung ermittelt, so gibt sie einen Hinweis z.B. über den Lautsprecher oder die Anzeige 11 an den Fahrer aus. In Zweifelsfällen kann der Fahrer über eine Bedieneinheit 12 die ermittelte Ausrichtung der erfassten Parklücke korrigieren. Ferner kann der Benutzer durch z.B. entweder eine konkludente Fahrhandlung den Einparkvorgang beginnen. In einer ersten Ausführungsform steuert die Auswerteeinheit 5 automatisch den Triebstrang des Fahrzeugs 1 derart an, dass das Fahrzeug entlang einer von der Recheneinheit 6 berechneten Einparktrajektorie ausgehend von seiner aktuellen Position in die vermessene Parklücke eingeparkt wird. In einer weiteren Ausführungsform ist es auch möglich, dass dem Fahrer über die Anzeige 11 und/oder den Lautsprecher 10 Lenkanweisungen derart ausgegeben werden, dass er durch die Befolgung dieser Lenkanweisungen das Fahrzeug von der aktuellen Position in die Parklücke selbständig einparken kann. Bevorzugt sind zur Unterstützung bei dem Einparkvorgang insbesondere an einer Fahrzeugrückseite 13 und/oder an einer Fahrzeugvorderseite 14 weitere Abstandssensoren 15 angeordnet, die den Abstand zu Hindernissen vor und/oder hinter dem Fahrzeug messen. Hierdurch kann der Fahrer auch vor Hindernissen während des Einparkvorgangs gewarnt werden. Ferner kann auch während des Einparkvorgangs eine Korrektur der gemessenen Parklückenlänge erfolgen und entsprechend der Fahrweg in die Parklücke automatisch korrigiert werden.

In einer weiteren Ausführungsform kann an die Auswerteeinheit 5 auch eine Kameraeinheit 16 angeschlossen sein, die die Fahrzeugumgebung im Bereich der Fahrzeugseite 2 beobachtet. Insbesondere ist die Kamera dabei derart angeordnet, dass sie während der Vorbeifahrt an den parkenden Fahrzeugen vorbeigeführt wird und diese beobachten kann. Die Auswerteeinheit 5 ist dabei für eine Bildanalyse von von der bevorzugt im Infrarot arbeitenden Kamera 16 erzeugten Bilddaten ausgelegt. Hierbei können Fahrzeugkonturen ermittelt und insbesondere mit in dem Speicher 9 abgelegten Mustern von Fahrzeugkonturen verglichen werden. Insbesondere ist es möglich, eine Kreismustererkennung zur Detektion von Rädern durchzuführen. Kann die Kamera 16 Räder an einem Fahrzeug detektieren, so kann daraus geschlossen werden, dass das geparkte Fahrzeug ungefähr parallel zur Fahrtrichtung des Fahrzeugs 1 ausgerichtet ist.

In der Figur 5 ist ein erfindungsgemäßer Verfahrensablauf dargestellt. Das Verfahren beginnt mit einem Initialisierungsschritt 50 und wird z.B. durch einen Fahrer mit einer Aktivierung einer Parklückenvermessung ausgelöst. In einem Aufzeichnungsschritt 51 wird bei einer Vorbeifahrt ein Verlauf einer Kontur von Hindernissen an der Fahrzeugseite 2 aufgezeichnet. In einem ersten Prüfschritt 52 wird überprüft, ob eine Parklücke an der rechten Fahrzeugseite 2 erfasst wird. Ist dies nicht der Fall, so wird zu dem Aufzeichnungsschritt 51 zurückverzweigt und die Aufzeichnung einer Kontur von Hindernissen an der rechten Fahrzeugseite 2 wird fortgeführt. Wird eine Parklücke ermittelt, so wird zu einem zweiten Prüfschritt 53 verzweigt. In dem zweiten Prüfschritt 53 wird überprüft, ob eine ermittelte Parklücke groß genug für ein Längs- oder Quereinparken ist. Wird keine geeignete Parklücke gefunden, so wird ebenfalls zu dem Aufzeichnungsschritt 51 zurückverzweigt und der Aufzeichnungsvorgang wird fortgeführt. Wird dagegen eine geeignete Parklücke gefunden, so wird zu einem Bewertungsschritt 54 weiterverzweigt. In dem Bewertungsschritt 54 wird die Ausrichtung der Parklücke durch eine Analyse der Parklückenvermessung bestimmt, wie es bereits oben beispielhaft erläutert wurde. Hierzu kann insbesondere ein Längenvergleich von Konturen von Hindernissen durchgeführt werden, die die Parklücke begrenzen. Ferner kann auch eine Streuung der Messsignale untersucht werden, aus der auf die Anbringung von Radkästen geschlossen werden kann. Weiterhin ist es möglich, eine Bildanalyse von über einen Videosensor erfassten Fahrzeugen durchzuführen. In einem anschließenden dritten Prüfschritt 55 wird überprüft, ob es sich bei der Parklücke um eine Längsparklücke oder eine Querparklücke handelt. Handelt es sich um eine Längsparklücke, die parallel zum Fahrtverlauf des Fahrzeugs angeordnet ist, so wird zu einem Längseinparkschritt 56 verzweigt. Bevorzugt wird neben der Länge der Parklücke auch überprüft, ob die Breite der Parklücke für das Fahrzeug 1 ausreichend ist. Das Fahrzeug wird auf eine Benutzeranforderung ausgehend von seiner aktuellen Position rückwärts parallel zu seiner bisherigen Fahrtrichtung in die Längsparklücke eingeparkt. Wird in dem dritten Prüfschritt dagegen festgestellt, dass es sich um eine Querparklücke handelt, bei der in etwa senkrecht zur bisherigen Fahrtrichtung eingeparkt werden muss, muss ein entsprechend anderer Einparkweg berechnet werden. Hierzu wird zu einem Quereinparkschritt 57 verzweigt. Das Fahrzeug wird bevorzugt rückwärts ausgehend von seiner aktuellen Position durch entsprechend scharfes Einschlagen in die erfasste Querparklücke gerührt. Insbesondere hierbei sind mögliche Abstände zu Hindernissen innerhalb der Parklücke zu beachten.

In einer weiteren Ausführungsform können entsprechend einer erfassten Ausrichtung auch entsprechende Einparkvorgänge im beliebigen Winkeln zur aktuellen Fahrtrichtung durchgeführt werden.

Neben einem anhand des Ausführungsbeispiels erläuterten Suche nach einer Parklücke auf einer rechten Fahrzeugseite kann ebenso alternativ oder ergänzend eine linke Fahrzeugseite für ein Einparken an dieser Seite überwacht werden, insbesondere für die Verwendung auf Parkplätzen, in Einbahnstraßen oder in Straßennetzen mit Linksverkehr.

## Patentansprüche

1. Parkvorrichtung zur Unterstützung eines Einparkvorgangs eines Fahrzeugs mit Sensoren (3, 4) zur Erfassung einer Fahrzeugumgebung an wenigstens einer Fahrzeugseite und mit einer Auswerteeinheit (5) zur Ermittlung einer Ausrichtung der Parklücke mittels einer Erfassung der Parklückenumgebung, wobei die Auswerteeinheit (5) zum Ermitteln der Ausrichtung von Fahrzeugen in der Parklückenumgebung ausgelegt ist, die Ausrichtung wenigstens eines Fahrzeugs in der Parklückenumgebung bestimmt wird und wobei der Parklücke die Ausrichtung des wenigstens einen Fahrzeugs zugewiesen wird,
**dadurch gekennzeichnet, dass**
bei einem ungefähr senkrecht zu der Fahrtrichtung des Fahrzeugs abgestellten Fahrzeug in der Fahrzeugumgebung auf eine Querparklücke, bei einem ungefähr parallel zu der Parklücke abgestellten Fahrzeug in der Fahrzeugumgebung auf eine Längsparklücke geschlossen wird.

2. Parkvorrichtung nach Anspruch 1, **gekennzeichnet durch** Abstandssensoren (3, 4) zur Vermessung einer Fahrzeugkontur eines sich neben dem Fahrzeug befindlichen, die Parklücke begrenzenden Fahrzeugs zur Ermittlung der Ausrichtung des Fahrzeugs.

3. Parkvorrichtung nach Anspruch 2, **gekennzeichnet durch** eine Speicher (9) zum Ablegen von charakteristischen Mustern für eine Fahrzeugvorderseite, eine Fahrzeugrückseite und/oder eine Fahrzeuglängsseite zur Ermittlung der Ausrichtung eines Fahrzeugs.

4. Parkvorrichtung nach einem der Ansprüche 1 bis 3, **gekennzeichnet durch** einen optischen Sensor (16) zur Detektion einer Seitenfläche von Fahrzeugrädern.

5. Parkvorrichtung nach einem der vorherigen Ansprüche, **gekennzeichnet durch** Abstandssensoren (3, 4) zum Detektieren eines Bordsteinverlaufs in einem Bereich der Parklücke.

6. Parkvorrichtung nach einem der vorherigen Ansprüche, **gekennzeichnet durch** eine Recheneinheit (6) zur Berechnung eines Einparkwegs in die Parklücke gemäß der erfassten Ausrichtung der Parklücke.

7. Verfahren zur Parkunterstützung, wobei eine Parklücke seitlich des Fahrzeugs während einer Vorbeifahrt des Fahrzeugs an der Parklücke vermessen wird, wobei eine Ausrichtung wenigstens eines Fahrzeugs in der Umgebung der Parklücke ermittelt wird und die Ausrichtung der Parklücke entsprechend der Ausrichtung des wenigstens einen Fahrzeugs gewählt wird,
**dadurch gekennzeichnet, dass**
in Abhängigkeit von der Vermessung der Umgebung der Parklücke ein Längseinparken oder ein Quereinparken in die Parklücke vorgeschlagen wird.

## Claims

1. Parking apparatus for assisting a parking operation for a vehicle having sensors (3, 4) for sensing a vehicle environment on at least one vehicle side and having an evaluation unit (5) for ascertaining an orientation for the parking space by sensing the parking space environment, wherein the evaluation unit (5) is designed to ascertain the orientation of vehicles in the parking space environment, the orientation of at least one vehicle in the parking space environment is determined, and wherein the parking space is assigned the orientation of the at least one vehicle,
**characterized in that**
if a vehicle is parked approximately perpendicular to the direction of travel of the vehicle in the vehicle environment then a perpendicular parking space is inferred, and if a vehicle is parked approximately parallel to the parking space in the vehicle environment then a parallel parking space is inferred.

2. Parking apparatus according to Claim 1, **characterized by** distance sensors (3, 4) for measuring a vehicle contour of a vehicle that is situated next to the vehicle and that bounds the parking space in order to ascertain the orientation of the vehicle.

3. Parking apparatus according to Claim 2, **characterized by** a memory (9) for storing characteristic patterns for a vehicle front, a vehicle rear and/or a vehicle longitudinal side in order to ascertain the orientation of a vehicle.

4. Parking apparatus according to one of Claims 1 to 3, **characterized by** an optical sensor (16) for detecting a lateral face of vehicle wheels.

5. Parking apparatus according to one of the preceding claims, **characterized by** distance sensors (3, 4) for detecting a kerb profile in a region of the parking space.

6. Parking apparatus according to one of the preceding claims, **characterized by** a computation unit (6) for calculating a parking path into the parking space on the basis of the sensed orientation of the parking space.

7. Method for parking assistance, wherein a parking space to the side of the vehicle is measured while the vehicle is travelling past the parking space, wherein an orientation for at least one vehicle in the environment of the parking space is ascertained, and the orientation of the parking space is chosen in line with the orientation of the at least one vehicle,
**characterized in that**
the measurement of the environment of the parking space is taken as a basis for proposing parallel parking or perpendicular parking in the parking space.

## Revendications

1. Dispositif de stationnement servant à aider à un processus de stationnement d'un véhicule, pourvu de capteurs (3, 4) permettant de détecter un environnement de véhicule au niveau d'au moins un côté de véhicule et pourvu d'une unité d'analyse (5) permettant de calculer l'orientation de l'espace de stationnement et avec détection de l'environnement de l'espace de stationnement, l'unité d'analyse (5) étant conçue pour calculer l'orientation des véhicules dans l'environnement de l'espace de stationnement, ladite orientation d'au moins un véhicule placé dans l'environnement de l'espace de stationnement étant définie et l'orientation de l'au moins un véhicule étant associée à l'espace de stationnement, **caractérisé en ce qu'**on déduit la présence d'un espace de stationnement en épi en présence d'un véhicule garé approximativement perpendiculairement à la direction de conduite du véhicule dans l'environnement de véhicule et qu'on déduit la présence d'un espace de stationnement longitudinal en présence d'un véhicule garé approximativement parallèlement à l'espace de stationnement dans l'environnement de véhicule.

2. Dispositif de stationnement selon la revendication 1, **caractérisé par** la présence de capteurs de distance (3, 4) servant à mesurer un contour de véhicule d'un véhicule se trouvant à côté du véhicule et délimitant l'espace de stationnement afin de calculer l'orientation du véhicule.

3. Dispositif de stationnement selon la revendication 2, **caractérisé par** la présence d'une mémoire (9) permettant de mémoriser des modèles caractéristiques pour un côté avant de véhicule, un côté arrière de véhicule et/ou un côté longitudinal de véhicule en vue de calculer l'orientation d'un véhicule.

4. Dispositif de stationnement selon l'une quelconque des revendications 1 à 3, **caractérisé par** la présence d'un capteur optique (16) permettant de détecter une surface latérale des roues de véhicule.

5. Dispositif de stationnement selon l'une quelconque des revendications précédentes, **caractérisé par** la présence de capteurs de distance (3, 4) permettant de détecter la trajectoire d'un trottoir dans la région de l'espace de stationnement.

6. Dispositif de stationnement selon l'une quelconque des revendications précédentes, **caractérisé par** la présence d'un ordinateur (6) permettant de calculer une trajectoire de stationnement permettant de rentrer dans l'espace de stationnement en fonction de l'orientation détectée de l'espace de stationnement.

7. Procédé d'aide au stationnement, un espace de stationnement étant mesuré au niveau de l'espace de stationnement, en côté du véhicule, pendant une marche avant du véhicule, une orientation d'au moins un véhicule dans l'environnement de l'espace de stationnement étant calculée et l'orientation de l'espace de stationnement étant choisie en fonction de l'orientation de l'au moins un véhicule, **caractérisé en ce qu'**un stationnement longitudinal ou un stationnement transversal dans l'espace de stationnement est proposé en fonction d'une mesure de l'environnement de l'espace de stationnement.
